# EUROPEAN PATENT APPLICATION

(11) **EP 3 131 051 A1**
(43) Date of publication of application: **15.02.2017**
(21) Application number: 14888228.5
(22) Date of filing: 04.04.2014
(51) Int. Cl.: G06Q 50/06

(54) **ELECTRICITY TRANSACTION PLANNING ASSISTANCE SYSTEM AND ELECTRICITY TRANSACTION PLANNING ASSISTANCE METHOD**

(71) Applicant: Hitachi, Ltd., Chiyoda-ku Tokyo 100-8280 (JP)
(72) Inventor: OKAMOTO, Yoshihisa, Tokyo 100-8280 (JP); WATANABE, Tohru, Tokyo 100-8280 (JP); YANO, Kojin, Tokyo 100-8280 (JP); KOMAKI, Daisuke, Tokyo 100-8280 (JP); UTSUMI, Masato, Tokyo 100-8280 (JP)
(74) Representative: Moore, Graeme Patrick
(86) International application number: PCT/JP2014/059982
(87) International publication number: WO 2015/151278

(57) **Abstract**

A power transaction plan planning support system and power transaction plan planning support method capable of maximizing earnings from electrical power transactions by reducing risks involved in changes in a market price and a position amount are proposed. A power transaction plan planning support system for planning an electrical power transaction plan includes: a suppressible power consumption amount calculation unit which calculates a suppressible power consumption amount; a market information acquisition unit which acquires a market price and a position amount; a transaction plan planning rule which defines a position amount threshold value which serves as a criterion to determine whether the position amount is insufficient or not, as a determination condition to determine whether to buy electrical power from an electrical power transaction market or not; and a transaction plan planning unit which reduces the position amount threshold value by the suppressible power consumption amount and calculates an amount of the electrical power to be purchased from the electrical power transaction market on the basis of the reduced position amount threshold value, the market price, and the transaction plan planning rule.

## Description

### TECHNICAL FIELD

The present invention relates to a power transaction plan planning support system and power transaction plan planning support method, and is particularly suited for use in a power transaction plan planning support system and power transaction plan planning support method for planning an electrical power transaction plan in conjunction with electrical power consumption suppression on customers.

### BACKGROUND ART

PTL 1 discloses an electrical power transaction bidding support system including: a marginal cost curve creation unit which creates a marginal cost curve by using demand prediction data, characteristic data relating to the operation of a power generation unit, and data relating to a power generation plan; a bidding data creation unit which creates bidding data by using mark-up data and divided data on the basis of the created marginal cost curve; and an earnings calculation unit which calculates an assumed transaction amount by using the created bidding data and assumed transaction price data of an electrical power exchange and calculates assumed earnings by using the calculated assumed transaction amount and the characteristic data relating to the operation of the power generation unit.

### CITATION LIST

### PATENT LITERATURE

PTL 1: Japanese Patent Application Publication No. 2007-41969

### SUMMARY OF THE INVENTION

### PROBLEMS TO BE SOLVED BY THE INVENTION

However, with the electrical power transaction bidding support system described in PTL 1, if a market price decreases after buying the electric power due to price fluctuations of the electrical power, the chance to be able to buy the electric power at a low price is lost; and if the purchase is withheld by predicting a reduction of the market price and the market price then actually increases, there is no choice but to buy the electrical power at a high price. Consequently, a purchaser may ocasionally suffer a loss.

Moreover, regarding the electrical power transaction bidding support system described in PTL 1, no consideration is given to a case where an electrical power amount which can be purchased from the electrical power transaction market at a reasonable price (a position amount) may be depleted; and even if the electrical power can be purchased at a low price, an amount to be purchased from the electrical power transaction market may not be sufficient for an amount of electrical power to be supplied to customers. Also in this case, the purchaser may suffer a loss.

The present invention was devised in consideration of the above-described circumstances and proposes a power transaction plan planning support system and power transaction plan planning support method capable of maximizing earnings from electrical power transactions by reducing risks involved in changes in the market price and the position amount.

### MEANS TO SOLVE THE PROBLEMS

In order to solve the above-described problems, provided according to the present invention is a power transaction plan planning support system for planning an electrical power transaction plan, including: a suppressible power consumption amount calculation unit which calculates a suppressible power consumption amount; a market information acquisition unit which acquires a market price and a position amount; a transaction plan planning rule which defines a position amount threshold value which serves as a criterion to determine whether the position amount is insufficient or not, as a determination condition to determine whether to buy electrical power from an electrical power transaction market or not; and a transaction plan planning unit which reduces the position amount threshold value by the suppressible power consumption amount and calculates an amount of the electrical power to be purchased from the electrical power transaction market on the basis of the reduced position amount threshold value, the market price, and the transaction plan planning rule.

Furthermore, in order to solve the above-described problems, provided according to the present invention is a power transaction plan planning support method for planning an electrical power transaction plan, including: a first step executed by a suppressible power consumption amount calculation unit calculating a suppressible power consumption amount; a second step executed by a market information acquisition unit acquiring a market price and a position amount; and a third step executed by a transaction plan planning unit reducing a position amount threshold value by the suppressible power consumption amount and calculating an amount of electrical power to be purchased from an electrical power transaction market on the basis of the reduced position amount threshold value, the market price, and a transaction plan planning rule which defines the position amount threshold value which serves as a criterion to determine whether the position amount is insufficient or not, as a determination condition to determine whether to buy the electrical power from the electrical power transaction market or not.

### ADVANTAGEOUS EFFECTS OF THE INVENTION

According to the present invention, earnings from electrical power transactions can be maximized by reducing risks involved in changes in the market price and the position amount.

### BRIEF DESCRIPTION OF DRAWINGS

Fig. 1 is an overall configuration diagram of a power transaction plan planning support system according to this embodiment;
Fig. 2 is a logical configuration diagram of order book information;
Fig. 3 is a logical configuration diagram of supply-demand adjustment contract information;
Fig. 4 is a logical configuration diagram of power consumption suppression history;
Fig. 5 is a logical configuration diagram of a suppressible power consumption amount;
Fig. 6 is a logical configuration diagram of market price information;
Fig. 7 is a logical configuration diagram of external information;
Fig. 8 is a logical configuration diagram of market price change prediction information;
Fig. 9 is a logical configuration diagram of position amount information;
Fig. 10 is a logical configuration diagram of position amount change prediction information;
Fig. 11 is a logical configuration diagram of transaction plan planning rules;
Fig. 12 is a comparative example not including a suppressible power consumption amount calculation unit;
Fig. 13 is an example including the suppressible power consumption amount calculation unit;
Fig. 14 is an example including a market price prediction unit;
Fig. 15 is an example including a position amount prediction unit;
Fig. 16 is a configuration diagram of a display screen;
Fig. 17 is a processing flow of suppressible power consumption amount calculation processing;
Fig. 18 is a processing flow of market price change prediction processing;
Fig. 19 is a processing flow of position amount change prediction processing; and
Fig. 20 is a processing flow of transaction plan planning processing;

### DESCRIPTION OF EMBODIMENTS

An embodiment of the present invention will be described below in detail with reference to drawings.

### (1) Overall Configuration

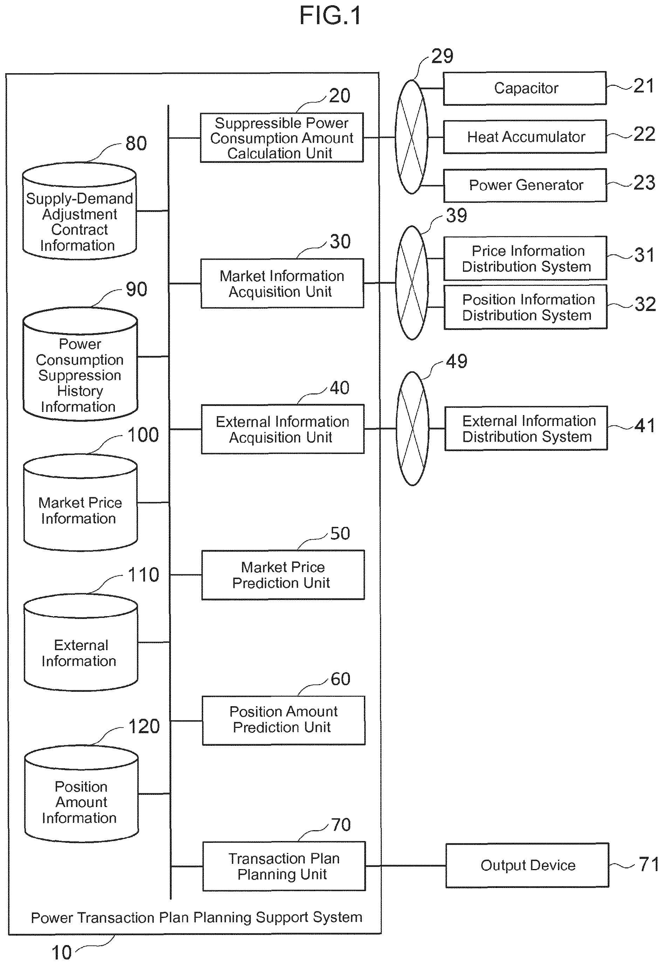

Fig. 1 illustrates an overall configuration of a power transaction plan planning support system 10 according to this embodiment. The power transaction plan planning support system 10 is a system for adjusting a demand amount of electrical power by a retail business operator or an aggregator who is a supplier of the electrical power giving an instruction to a customer, who is a demander of the electrical power, to suppress the demand amount or shift demand time, adjusting an electrical power retail price, and operating equipment retained by the customer (such as a capacitor 21, a heat accumulator 22, and a power generator 23). Moreover, the power transaction plan planning support system 10 is a system retained or utilized by business operators who trade electrical power products in an electrical power transaction market. The power transaction plan planning support system 10 is used when a plurality of business operators cooperate with each other to adjust the electrical power demand amount and trade the electrical power products.

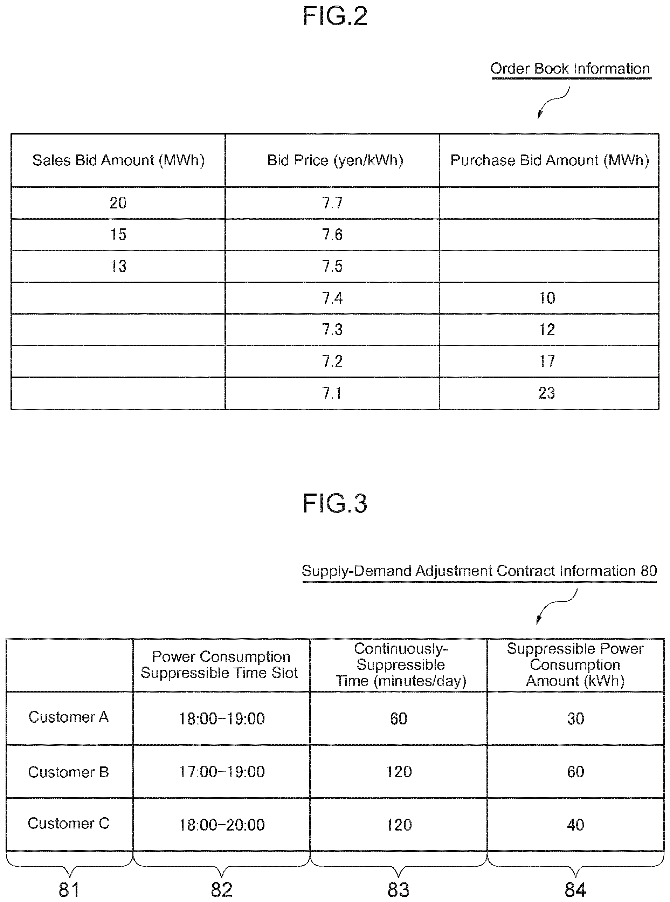

The electrical power product(s) means an amount of electrical power which is purchased from the electrical power transaction market and is normally defined as one product for each delivery time. For example, In case of an electrical power product delivered on an hourly basis, an electrical power amount delivered at 10:00 to 11:00 on December 21 is considered to be one product. Transactions of electrical power products in the electrical power transaction market will be explained with reference to Fig. 2.

Fig. 2 shows order book information. In the electrical power transaction market, a transaction participant submits purchase bids and sales bids by designating a price (price per unit electrical power) for each electrical power product. The order book information indicated in Fig. 2 shows amounts of a purchase bid and a sales bid for each bid price remaining in the market due to failure of closing of transactions. Among the sales bid amounts remaining in the market due to the failure of closing of transactions, a total value of the sales bid amounts in a volume zone of the bid price is called a "position amount" in this embodiment.

In case of Fig. 2, for example, a total value 28 MWh of a sales bid amount 13 MWh at 7.5 yen/kWh and a sales bid amount 15 MWh at 7.6 yen/kWh is the position amount. Furthermore, a market price of the electrical power product is a price at which the relevant transaction is closed; and in case of Fig. 2, for example, the market price is 7.4 yen or 7.5 yen.

Referring back to Fig. 1, the power transaction plan planning support system 10 is configured by including a suppressible power consumption amount calculation unit 20, a market information acquisition unit 30, an external information acquisition unit 40, a market price prediction unit 50, a position amount prediction unit 60, a transaction plan planning unit 70, supply-demand adjustment contract information 80, power consumption suppression history information 90, a market price information 100, external information 110, and position amount information 120.

The suppressible power consumption amount calculation unit 20, the market information acquisition unit 30, the external information acquisition unit 40, the market price prediction unit 50, the position amount prediction unit 60, and the transaction plan planning unit 70 are programs executed on computers such as servers and PCs (Personal Computers). The computer(s) for executing these respective units may be one computer or a plurality of computers. When the plurality of computers are used, the plurality of computers are connected via a wired or wireless network such as a LAN (Local Area Network) or a USB (Universal Serial Bus).

The supply-demand adjustment contract information 80, the power consumption suppression history information 90, the market price information 100, the external information 110, and the position amount information 120 are information stored in strorage such as hard disks or memories inside or outside the computers for executing the above-described programs. When these respective pieces of information are stored in the storage outside the computers, the computers and the storage are connected via a wired or wireless network such as a LAN or a USB.

Incidentally, the minimum required configuration of this embodiment is the suppressible power consumption amount calculation unit 20, the market information acquisition unit 30, and the transaction plan planning unit 70; and earnings from the electrical power transactions can be further enhanced by combining the above-mentioned units with other aforementioned respective units and respective pieces of information.

Furthermore, the power transaction plan planning support system 10, the capacitor 21, the heat accumulator 22, the power generator 23, a price information distribution system 31, a position information distribution system 32, and an external information distribution system 41 are connective via networks 29, 39, and 49 such as the Internet.

The capacitor 21 is a medium capable of accumulating electrical power, such as a storage battery or flywheel installed or mounted in, for example, a public space, a building, a house or an EV (electrical vehicle). The heat accumulator 22 is a medium capable of accumulating heat or cooling properties, such as a regional refrigeration and heating equipment, a heat pump water heater, or a heat-accumulating heating equipment installed in, for example, a public space, a building, or a house. The power generator 23 is a medium capable of generating electrical power such as a private power generator or a fuel battery installed in, for example, a public space, a building, or a house.

The price information distribution system 31 is a computer system which is managed by the electrical power transaction market, electrical power traders, or others and distributes a present value or history of the market price of the electrical power product traded in the electrical power transaction market to external systems or applications. The position information distribution system 32 is a computer system which is managed by the electrical power transaction market, the electrical power traders, or others and distributes present order book information, position amount, or history of the electrical power product to external systems or applications.

The external information distribution system 41 is a computer system which distributes related information which influences the market price, the position amount, or the suppressible power consumption amount, and distributes information such as temperatures and an electrical power demand amount as the related information.

The suppressible power consumption amount calculation unit 20 is a program for calculating the suppressible power consumption amount for each time slot. The suppressible power consumption amount is a predicted value of a consumed electrical power amount predicted to decrease when a request for the electrical power consumption suppression is made, by comparing a consumed electrical power amount when requesting the customer to suppress the consumption of the electrical power, with a consumed electrical power amount when such request is not made.

Furthermore, the suppressible power consumption amount calculation unit 20 calculates the suppressible power consumption amount by using any one or all of an accumulated electrical power amount acquired from the capacitor 21, an accumulated heat amount acquired from the heat accumulator 22, a generated electrical power amount acquired from the power generator 23, the supply-demand adjustment contract information 80, and the power consumption suppression history information 90 via the network 29.

The market information acquisition unit 30 is a program for acquiring the present or past market price and position amount of the electrical power products traded in the electrical power transaction market. The market information acquisition unit 30 acquires the market price from the price information distribution system 31 and acquires the position amount from the position information distribution system 32 via the network 39. The market price and the position amount may be acquired via a storage medium such as a compact disc or a portable flash memory.

The external information acquisition unit 40 is a program for acquiring external information such as the temperature or the electrical power demand amount which may influence the market price and the position amount. The external information acquisition unit 40 acquires, via the network 49, the external information obtained from the external information distribution system 41 such as a weather information distribution system or an electrical power demand amount distribution system and delivers such external information to the market price prediction unit 50 or the position amount prediction unit 60. The external information may be acquired via a storage medium such as a compact disc or a portable flash memory.

The market price prediction unit 50 is a program for predicting temporal changes of the market price of the electrical power product. The market price prediction unit 50 predicts the market price by using any one or all of the market price acquired by referring to the market price information 100 and the external information such as the temperature or the electrical power demand amount acquired by referring to the external information 110.

The position amount prediction unit 60 is a program for predicting temporal changes of the position amount of the electrical power product. The position amount prediction unit 60 predicts the position amount by using any one or all of the external information such as the temperature or the electrical power demand amount acquired by referring to the external information 110 and the position amount acquired by referring to the position amount information 120.

The transaction plan planning unit 70 is a program for calculating a scheduled amount to be purchased from the electrical power transaction market while reducing the risk of buying the electrical power at a high price from the electrical power transaction market and the risk of becoming no longer capable of buying the electrical power at a fair price from the electrical power transaction market due to a shortage of the position amount, by checking the timing when the electrical power can be procured at a low price from the electrical power transaction market and the timing when the electrical power can be procured with certainty, by using any one or all of the suppressible power consumption amount calculated by the suppressible power consumption amount calculation unit 20, the temporal changes of the market price predicted by the market price prediction unit 50, and the temporal changes of the position amount predicted by the position amount prediction unit 60.

When calculating the scheduled purchase amount, the transaction plan planning unit 70 calculates a deemed procured electrical power amount by adding the suppressible power consumption amount calculated by the suppressible power consumption amount calculation unit 20 to the electrical power amount which is already procured in a relative transaction or a transaction at the electrical power transaction market. An attempt to reduce the risk of buying the electrical power at a high price and the risk of shortage of the position amount can be made by reducing the electrical power amount to be procured from the electrical power transaction market by increasing the deemed procured electrical power amount.

The supply-demand adjustment contract information 80 is information concerning a supply-demand adjustment contract concluded with the customer. The supply-demand adjustment contract is commitments concerning, for example, demand suppression and demand time and specifically sets forth, for example, available time slots for the demand suppression and the demand time, the demand amount, incentives for the demand suppression, or penalties In case of failure of implementation.

The power consumption suppression history information 90 is information in which past results of the customer's implementation of the demand suppression and the demand time are recorded. The market price information 100 is information in which changes of the market price of each electrical power product acquired by the market information acquisition unit 30 are recorded. The external information 110 is information in which history information and prediction information concerning the external information such as the temperature or the electrical power demand amount acquired by the external information acquisition unit 40 are recorded. The position amount information 120 is information in which changes of the position amount of each electrical power product acquired by the market information acquisition unit 30 are recorded.

### (2) Details of Each Piece of Information

Fig. 3 illustrates a logical configuration of the supply-demand adjustment contract information 80. The supply-demand adjustment contract information 80 is information used when the suppressible power consumption amount calculation unit 20 calculates the customer's suppressible power consumption amount; and the supply-demand adjustment contract information 80 is composed of a customer column 81, a power consumption suppressible time slot column 82, a continuously-suppressible time column 83, and a suppressible power consumption amount column 84.

The customer column 81 stores information for identifying a customer who is a target of the electrical power consumption suppression. The power consumption suppressible time slot column 82 stores a time slot when the electrical power consumption suppression is possible. The continuously-suppressible time column 83 stores time when continuous electrical power consumption suppression is possible. The suppressible power consumption amount column 84 stores the electrical power amount which can be suppressed by the electrical power consumption suppression.

Therefore, in case of Fig. 3, it is shown that, for example, "customer A" concluded a supply-demand adjustment contract specifying that the electrical power consumption suppression may be conducted continuously for "60" minutes during the time slot of "18:00 to 19:00." It is also shown that this customer A concluded the supply-demand adjustment contract specifying "30" kWh as the electrical power amount which can be suppressed when conducting the electrical power consumption suppression.

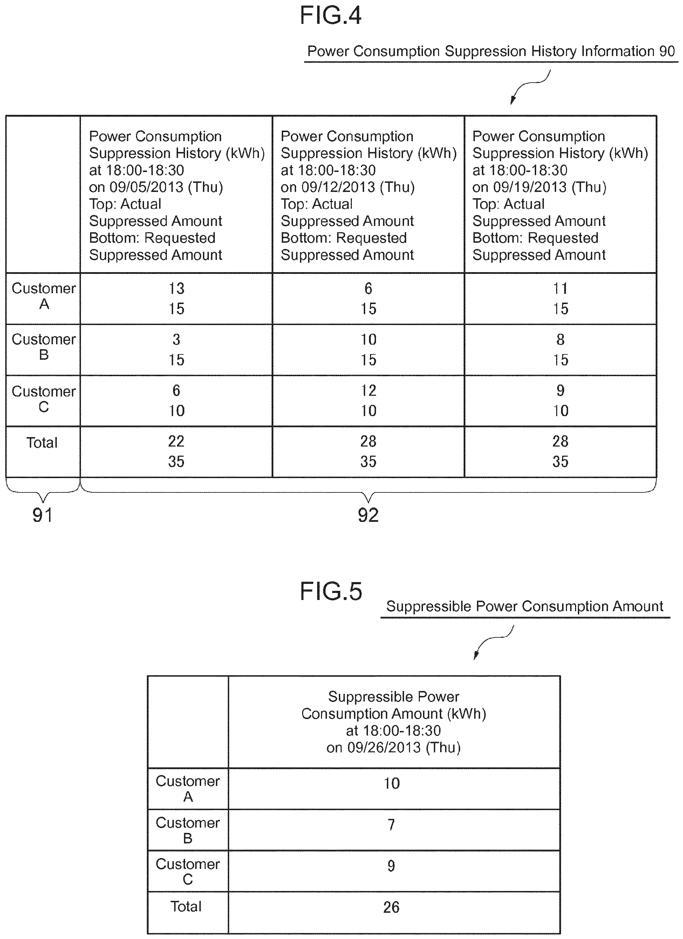

Fig. 4 illustrates a logical configuration of the power consumption suppression history information 90. The power consumption suppression history information 90 is information used when the suppressible power consumption amount calculation unit 20 calculates the customer's suppressible power consumption amount; and the power consumption suppression history information 90 is composed of a customer column 91 and a history column 92.

The customer column 91 stores information for identifying a customer who is a target of the electrical power consumption suppression. The history column 92 stores a requested suppressed mount, for which the customer is requested to suppress the consumption of the electrical power, and an actually suppressed amount for each date and time.

Therefore, in case of Fig. 4, it is shown that, for example, "customer A" received a request for the electrical power consumption suppression of "15 kWh" "from 18:00 to 18:30 on Thursday, September 5, 2013" and actually conducted the electrical power consumption suppression of "13 kWh"; and "customer A" received a request for the electrical power consumption suppression of "15 kWh" "from 18:00 to 18:30 on Thursday, September 12, 2013" and actually conducted the electrical power consumption suppression of "6 kWh."

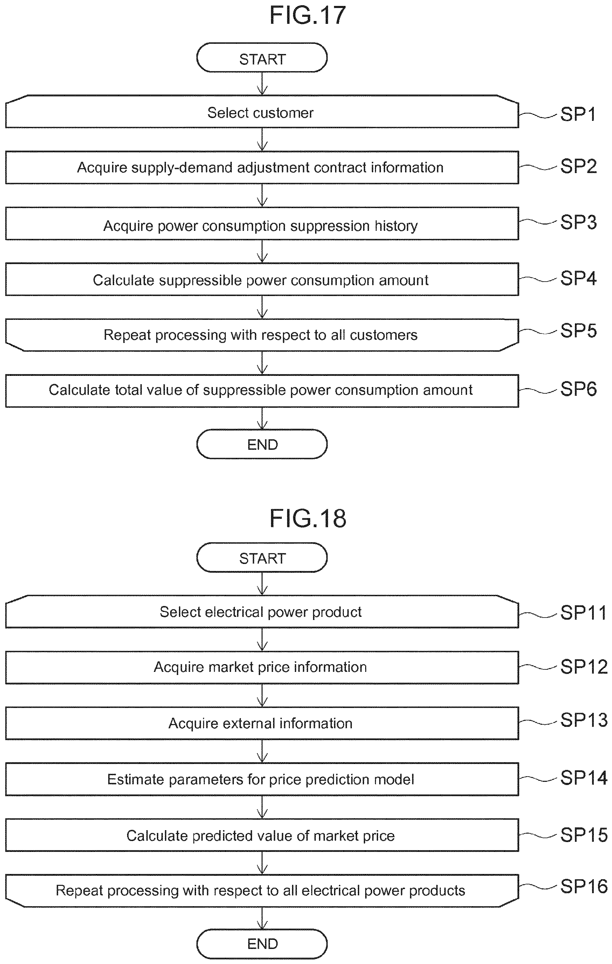

Fig. 5 illustrates a logical configuration of the suppressible power consumption amount. The suppressible power consumption amount is: information calculated when the suppressible power consumption amount calculation unit 20 executes suppressible power consumption amount calculation processing (Fig. 17); and is information concerning the suppressible electrical power amount which can be predicted when the customer is requested to suppress the consumption of the electrical power in the future.

In case of Fig. 5, it is shown that when the electrical power consumption suppression is requested during the time slot of "from 18:00 to 18:30 on Thursday, September 26, 2013" in the future, "customer A" is predicted to be capable of suppressing the electrical power amount of "10 kWh," "customer B" is predicted to be capable of suppressing the electrical power amount of "7 kWh," and "customer C" is predicted to be capable of suppressing the electrical power amount of "9 kWh," and it is predicted that a total electrical power amount of "26 kWh" can be suppressed.

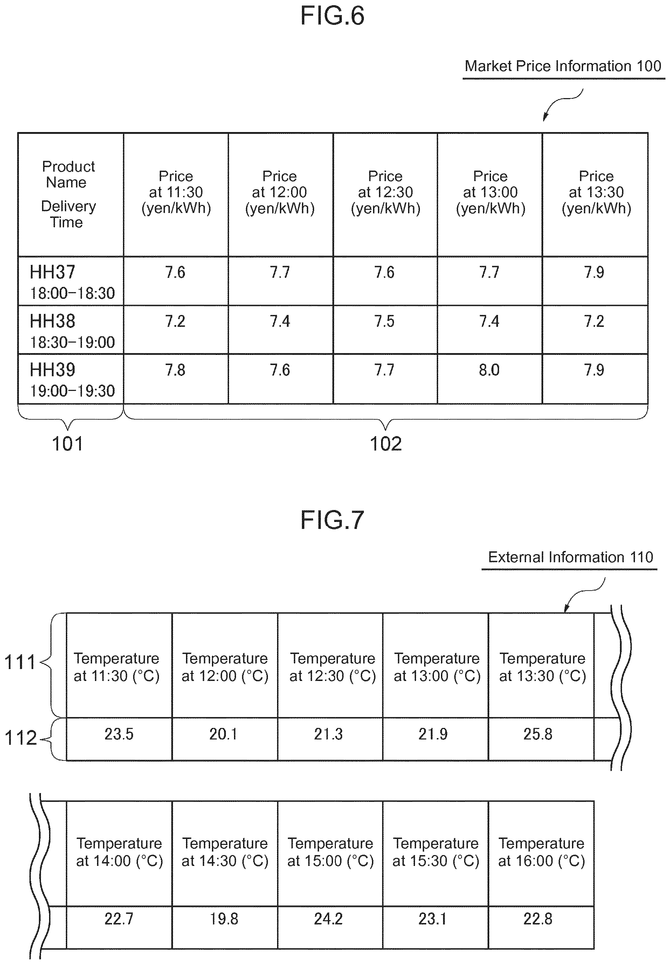

Fig. 6 illustrates a logical configuration of the market price information 100. The market price information 100 is information used when the market price prediction unit 50 predicts the market price of the electrical power product; and the market price information 100 is composed of a product name delivery time column 101 and a market price column 102.

The product name delivery time column 101 stores information for identifying the relevant electrical power product and delivery time of the electrical power product. The market price column 102 stores history of the market price of the electrical power product.

Therefore, in case of Fig. 6, it is shown that, for example, an electrical power product "HH37" is a product regarding which the electrical power is delivered during the time slot of "18:00 to 18:30." It is also shown that the market price of this electrical power product "HH37" changed as follows: the "price at 11:30" was "7.6 yen/kWh," the "price at 12:00" was "7.7 yen/kWh," and then the "price at 12:30" was "7.6 yen/kWh."

Fig. 7 illustrates a logical configuration of the external information 110. The external information 110 is information used when the market price prediction unit 50 predicts the market price of the electrical power product and when the position amount prediction unit 60 predicts the position amount of the electrical power transaction market; and the external information 110 is composed of a time column 111 and an environment column 112.

The time column 111 stores time identical to, or corresponding to, time when the market price of the electrical power product is acquired (Fig. 6). The environment column 112 stores history of information concerning the external environment.

Therefore, in case of Fig. 7, it is shown that, for example, the external information indicating "23.5°C" as the "temperature at 11:30" and "20.1°C" as the "temperature at 12:00."

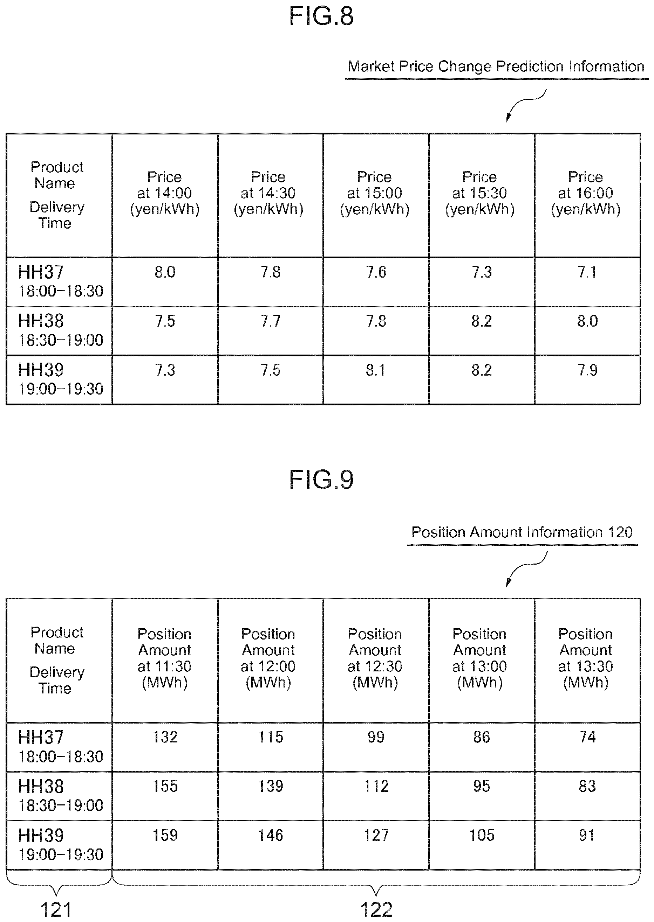

Fig. 8 illustrates a logical configuration of the market price change prediction information. The market price change prediction information is: information calculated when the market price prediction unit 50 executes market price change prediction processing (Fig. 18); and information indicating future predicted changes of the market price.

In case of Fig. 8, it is shown that, for example, the market price of the electrical power product "HH37" regarding which the electrical power is delivered at "18:00 to 18:30" is predicted to change as follows: "8.8 yen" "at 14:00," "7.8 yen" "at 14:30," and then "7.6 yen" "at 15:00."

Fig. 9 illustrates a logical configuration of the position amount information 120. The position amount information 120 is information used when the position amount prediction unit 60 predicts the position amount of the electrical power product; and the position amount information 120 is composed of a product name delivery time column 121 and a position amount column 122.

The product name delivery time column 121 stores information for identifying the electrical power product and delivery time of the electrical power product. The position amount column 122 stores history of the position amount of the electrical power product.

Therefore, in case of Fig. 9, it is shown that, for example, the electrical power product "HH37" is a product regarding which the electrical power is delivered during the time slot of "18:00 to 18:30." It is also shown that the position amount of this electrical power product "HH37" changed as follows: "132 MWh" as the "position amount at 11:30," "115 MWh" as the "position amount at 12:00," and then "99 MWh" as the "position amount at 12:30."

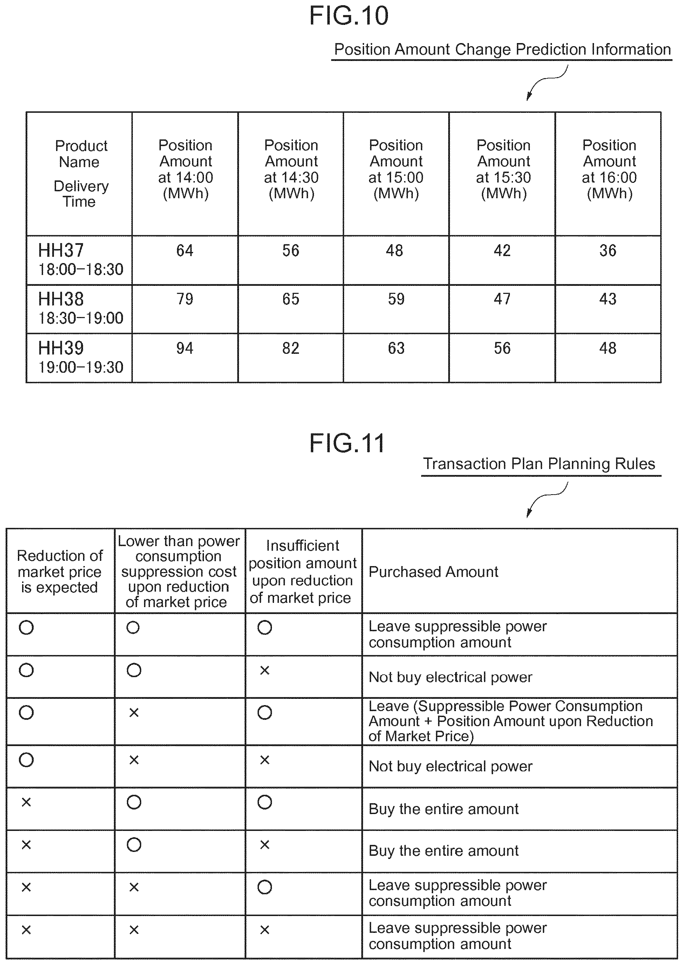

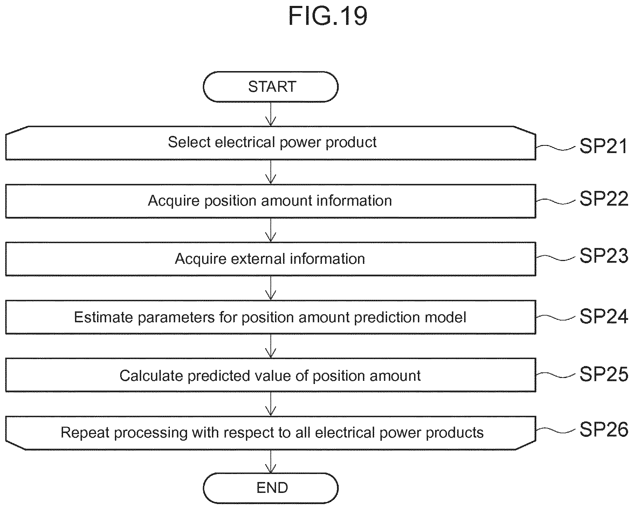

Fig. 10 illustrates a logical configuration of the position amount change prediction information. The position amount change prediction information is: information calculated when the position amount prediction unit 60 executes position amount change prediction processing (Fig. 19); and information indicating future predicted changes of position amount.

In case of Fig. 10, it is shown that, for example, the position amount of the electrical power product "HH37" regarding which the electrical power is delivered at "18:00 to 18:30" is predicted to change as "64 MWh" at "14:00," "56 MWh" at "14:30," and then "48 MWh" at "15:00" in the future.

Fig. 11 illustrates a logical configuration of the transaction plan planning rules. The transaction plan planning rules are: information used when the transaction plan planning unit 70 plans a transaction plan; and information recorded on a medium to which the transaction plan planning unit 70 can refer.

The transaction plan planning rules define determination conditions in advance to determine whether to buy the electrical power from the electrical power transaction market or not; and in this example, three determination conditions specifying "reduction of market price is expected," "lower than power consumption suppression cost upon reduction of the market price," and "insufficient position amount upon reduction of the market price" are defined. Furthermore, a "purchased amount" is defined in association with determination results based on these determination conditions.

When planning the transaction plan, the transaction plan planning unit 70 determines these three determination conditions, determines whether or not to buy the electrical power from the electrical power transaction market on the basis of the determination results, and calculates the purchased amount if the electrical power is to be purchased.

The determination condition specifying that "reduction of market price is expected" is defined to determine whether or not there is any time slot in which the predicted value of the market price calculated by the market price prediction unit 50 becomes lower than the present market price acquired by the market information acquisition unit 30. When there is a time slot in which the predicted value becomes lower than the present market price, the determination condition specifying that "reduction of market price is expected" is determined as "○."

Incidentally, when the present market price exceeds a predetermined target price, the determination condition specifying that "reduction of market price is expected" may be determined as "○." Furthermore, instead of simply comparing the present market price with the future predicted value of the market price, for example, the future market price may be calculated by adding an extra amount equivalent to the risks or the present market price may be calculated by reducing an amount equivalent to the risks.

The determination condition specifying that "lower than power consumption suppression cost upon reduction of the market price" is defined to determine whether the market price which becomes lower than the present market price acquired by the market information acquisition unit 30, from among predicted values of the market price calculated by the market price prediction unit 50, is lower than the power consumption suppression cost or not. When the predicted value is lower than the power consumption suppression cost to be paid to the customer, such determination condition is determined as "○."

Incidentally, a target price may be used instead of the predicted value of the market price and deemed as the market price to be compared with the power consumption suppression cost. Moreover, when the market price does not decrease, the present price may be compared with the power consumption suppression cost. Furthermore, the future market price may be calculated by adding an extra amount equivalent to the risks or the present market price may be calculated by reducing an amount equivalent to the risks. When the market price decreases at a plurality of times, the above-described determination may be conducted at the first time of reduction of the market price or when the market price hits a record of the lowest value.

The determination condition specifying the "insufficient position amount upon reduction of the market price" is defined to determine whether or not the position amount is lower than a position amount threshold value at the point in time when the predicted value of the market price, from among predicted values of the market price calculated by the market price prediction unit 50, becomes lower than the present market price acquired by the market information acquisition unit 30.

Incidentally, the position amount at the point in time when the market price becomes the lowest value may be compared with the position amount threshold value, or the position amount at the point in time when the market price becomes lower than the present price may be compared with the position amount threshold value. Moreover, when the market price does not decrease, the present position amount may be compared with the position amount threshold value. Furthermore, the position amount predicted by the position amount prediction unit 60 may be assigned or the future position amount may be set as always insufficient. When the market price decreases at a plurality of times, the above-described determination may be conducted at the first time of reduction of the market price or when the market price hits a record of the lowest value. Furthermore, the above-described determination may be conducted before the position amount predicted by the position amount prediction unit 60 becomes lower than the position amount threshold value and when such position amount hits a record of the lowest value.

The "purchased amount" indicates the electrical power amount to be purchased at present on the basis of an unprocured electrical power amount. In case of "leave the suppressible power consumption amount," the electrical power amount obtained by subtracting the suppressible power consumption amount (Fig. 5) from the unprocured electrical power amount is set as the amount to be purchased from the electrical power transaction market. In case of "Not buy the electrical power," the purchased amount is set as 0. In case of "leave only (the suppressible power consumption amount + the position amount upon reduction of the market price)," the electrical power amount obtained by subtracting the suppressible power consumption amount and the position amount upon the reduction of the market price from the unprocured electrical power amount is set as the amount to be purchased from the market. In case of "buy the entire amount," the entire unprocured electrical power amount is set as the amount to be purchased from the electrical power transaction market.

### (3) Outlines of Transaction Plan

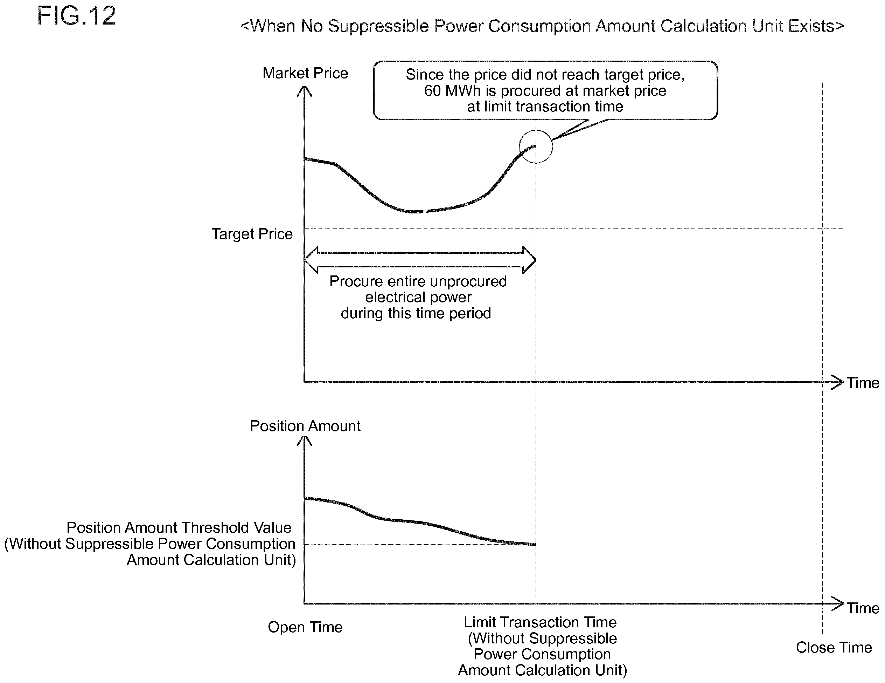

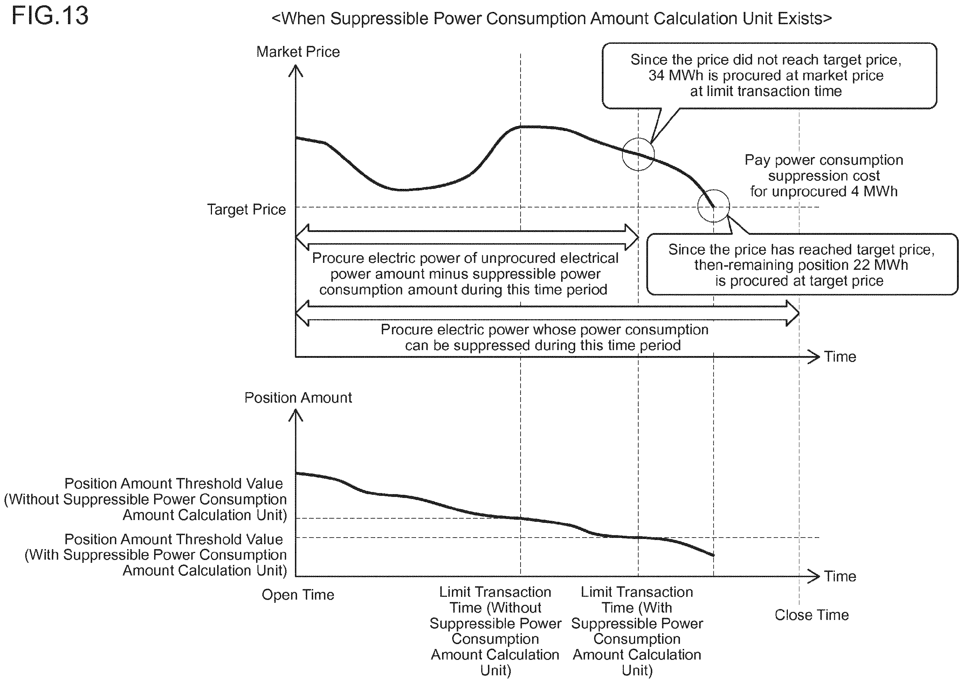

The outlines of a transaction plan planned by the transaction plan planning unit 70 will be explained with reference to Fig. 12 to Fig. 15. Incidentally, Fig. 12 illustrates a comparative example and Fig. 13 to Fig. 15 illustrate examples.

Fig. 12 illustrates, as a comparative example, a transaction plan planned by the transaction plan planning unit 70 when the power transaction plan planning support system 10 does not include the suppressible power consumption amount calculation unit 20 which is the minimum required component. In this comparative example, the unprocured electrical power which needs to be procured from the electrical power transaction market is 60 MWh. The market price and the position amount indicated in a graph are acquired by the market information acquisition unit 30.

Furthermore, a target price used in the following explanation is a desired price at which the electrical power is to be purchased from the electrical power transaction market, that is, a threshold value to determine whether to buy the electrical power or not; and when the market price becomes lower than this target price, the electrical power is to be purchased. The target price may be calculated by adding certain operating expenses and profits to a sales price of the electrical power, or may be calculated from, for example, an average transaction price at the electrical power transaction market, or may be set by a person in charge of the transaction depending on the circumstances.

Furthermore, the position amount threshold value is a set value for avoiding the risk of becoming no longer capable of procuring the electrical power from the electrical power transaction market, that is, a threshold value for determining whether to buy the electrical power or not; and when the position amount is lower than this position amount threshold value, the electrical power is purchased even if the target price is not achieved. Moreover, limit transaction time is time when the position amount becomes lower than the position amount threshold value.

In case of Fig. 12, the suppressible power consumption amount calculation unit 20 is not provided, so that the entire unprocured electrical power needs to be procured from the electrical power transaction market. In this case, in order to avoid the risk of becoming no longer capable of procuring the unprocured electrical power from the electrical power transaction market, the entire unprocured electrical power needs to be procured from the electrical power transaction market when the position amount is lower than the position amount threshold value even if the market price does not reach the target price. Consequently, the risk of buying the electrical power at a high price occurs.

Fig. 13 illustrates, as an example, the outlines of a transaction plan planned by the transaction plan planning unit 70 when the power transaction plan planning support system 10 includes the suppressible power consumption amount calculation unit 20 and the market information acquisition unit 30 which are the minimum required components, and does not include other components, that is, the external information acquisition unit 40, the market price prediction unit 50, and the position amount prediction unit 60.

In this example, the unprocured electrical power which needs to be procured from the electrical power transaction market is 60 MWh and the suppressible power consumption amount calculated by the suppressible power consumption amount calculation unit 20 is 26 MWh. The market price and the position amount indicated in a graph are acquired by the market information acquisition unit 30.

In case of Fig. 13, the suppressible power consumption amount calculation unit 20 is provided, so that not the entire unprocured electrical power needs to be procured from the electrical power transaction market. It is only necessary to request the customer to suppress the consumption of the electrical power and procure the electrical power amount obtained by subtracting the suppressible power consumption amount from the unprocured electrical power amount. Specifically speaking, the electrical power amount which needs to be procured from the electrical power transaction market can be reduced by increasing a deemed procured electrical power amount.

As a result, it is possible to reduce the position amount threshold value by the suppressible power consumption amount. Furthermore, the limit transaction time can be shifted behind as much as the position amount threshold value is reduced. Therefore, when the market price decreases within a time to which the limit transaction time is shifted behind, earnings can be enhanced as much as the reduction of the market price. Furthermore, when the market price increases, it is only necessary to suppress the customer's consumption of the electrical power without buying the electrical power from the electrical power transaction market. Therefore, it is possible to avoid the risk of increase in the market price.

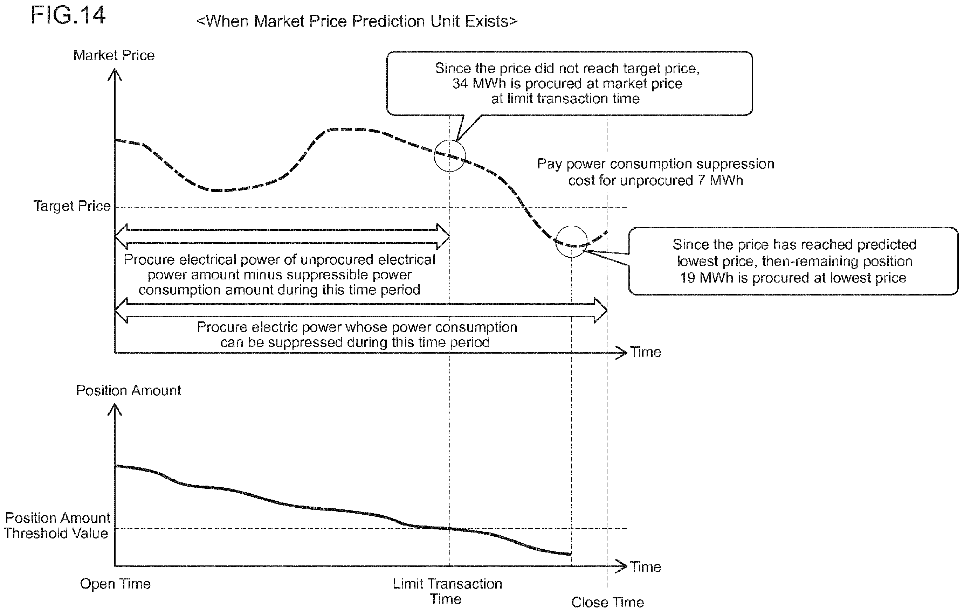

Fig. 14 illustrates, as an example, the outlines of a transaction plan planned by the transaction plan planning unit 70 when the power transaction plan planning support system 10 includes the suppressible power consumption amount calculation unit 20, the market information acquisition unit 30, and the market price prediction unit 50 and does not include the position amount prediction unit 60. Incidentally, the external information acquisition unit 40 may be included when the market price prediction unit 50 needs it to predict the market price.

In this example, the unprocured electrical power which needs to be procured from the electrical power transaction market is 60 MWh and the suppressible power consumption amount calculated by the suppressible power consumption amount calculation unit 20 is 26 MWh. The market price and the position amount indicated in a graph are acquired by the market information acquisition unit 30.

In case of Fig. 14, the power transaction plan planning support system 10 includes the market price prediction unit 50, so that future changes of the predicted value of the market price can be calculated. Therefore, when the market price is predicted to increase in the future, it is possible to determine to buy the electrical power even if the market price at present is higher than the target price; and when the market price is predicted to decrease in the future, it is possible to determine to not buy the electrical power at present.

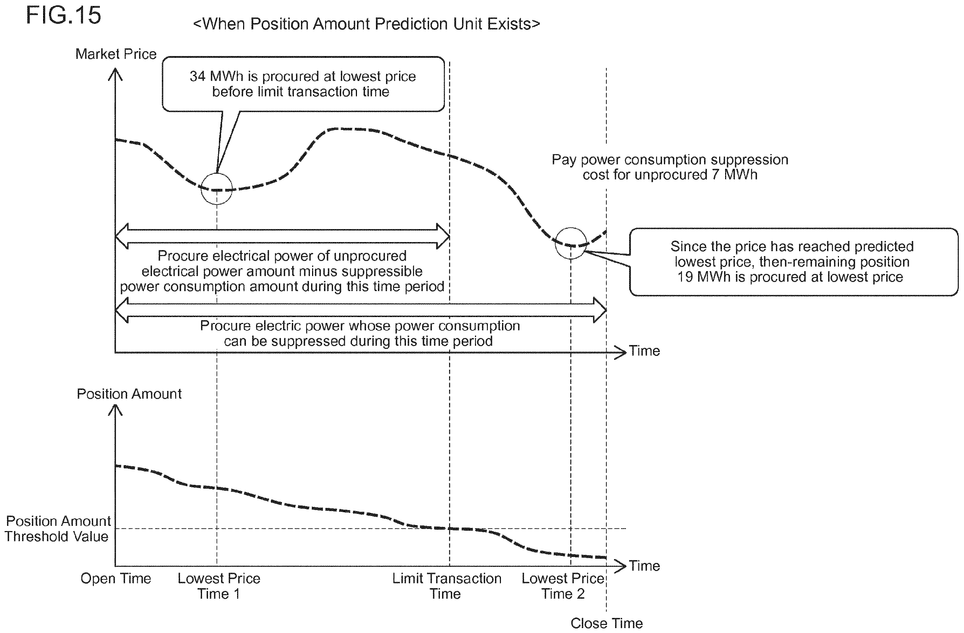

Fig. 15 illustrates, as an example, the outlines of a transaction plan planned by the transaction plan planning unit 70 when the power transaction plan planning support system 10 includes all the suppressible power consumption amount calculation unit 20, the market information acquisition unit 30, the external information acquisition unit 40, the market price prediction unit 50, and the position amount prediction unit 60.

In this example, the unprocured electrical power which needs to be procured from the electrical power transaction market is 60 MWh and the suppressible power consumption amount calculated by the suppressible power consumption amount calculation unit 20 is 26 MWh. The market price and the position amount indicated in a graph are acquired by the market information acquisition unit 30.

In case of Fig. 15, the power transaction plan planning support system 10 includes the position amount prediction unit 60, so that future changes of the predicted value of the position amount can be calculated. Accordingly, the limit transaction time can be predicted, so that the electrical power can be purchased at a time point before the limit transaction time and when the market price is lower than the target price.

### (4) Screen Structure

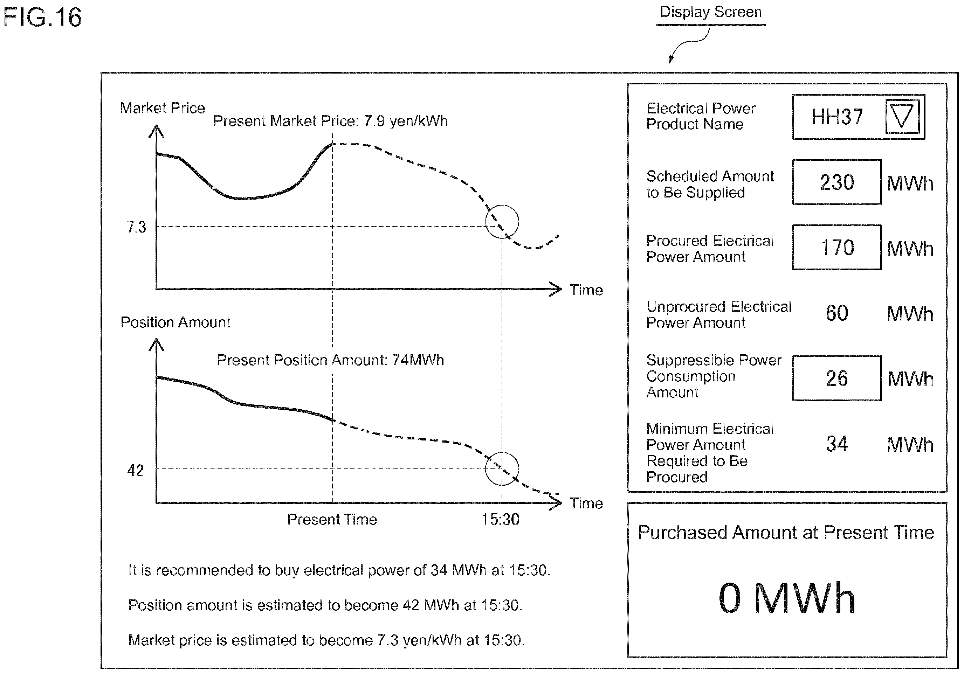

Fig. 16 illustrates an example of a display screen structure. This display screen is a screen which is displayed when the transaction plan planning unit 70 plans a transaction plan, and which is output from the output device 71.

The suppressible power consumption amount calculated by the suppressible power consumption amount calculation unit 20 is displayed on the display screen by operating a pull-down button on the display screen and selecting a target electrical power product. Moreover, the history of the market price and the history of the position amount which are acquired by the market information acquisition unit 30 are displayed with solid lines on graphs on the left and the predicted value of the market price calculated by the market price prediction unit 50 and the predicted value of the position amount calculated by the position amount prediction unit 60 are displayed with broken lines on the graphs on the left.

Furthermore, when the operation to input a scheduled amount to be supplied and a procured electrical power amount is performed, an unprocured electrical power amount obtained by subtracting the procured electrical power amount from the scheduled amount to be supplied is displayed and the purchased amount at present time is displayed.

### (5) Flowcharts

### (5-1) Suppressible Power Consumption Amount Calculation Processing

Fig. 17 illustrates a processing sequence for suppressible power consumption amount calculation processing. This suppressible power consumption amount calculation processing is processing executed by the suppressible power consumption amount calculation unit 20 for calculating the suppressible power consumption amount (Fig. 5) by referring to the supply-demand adjustment contract information 80(Fig. 3) and the power consumption suppression history information 90 (Fig. 4). The processing will be explained by referring to the suppressible power consumption amount calculation unit 20 as a processing subject.

The suppressible power consumption amount calculation unit 20 firstly selects a customer who is a calculation target of the suppressible power consumption amount (SP1). Next, the suppressible power consumption amount calculation unit 20 refers to the supply-demand adjustment contract information 80 and acquires the supply-demand adjustment contract information associated with the customer selected in step SP1 (SP2).

For example, when the customer selected in step SP1 is "customer A," the suppressible power consumption amount calculation unit 20 acquires information indicating that "the consumption of the electrical power of 30 kWh can be suppressed for continuous 60 minutes as an upper limit from 19:00 to 20:00," as the supply-demand adjustment contract information associated with customer A.

Subsequently, the suppressible power consumption amount calculation unit 20 refers to the power consumption suppression history information 90 and acquires the power consumption suppression history information associated with the customer selected in step SP1 (SP3).

For example, when the customer selected in step SP1 is "customer A," the suppressible power consumption amount calculation unit 20 acquires information indicating that the consumption suppression of the electrical power of "15 kWh" was requested at "18:00 to 18:30 on Thursday, September 5, 2013" and actually a consumed electrical power amount of "13 kWh" was suppressed, and the consumption suppression of the electrical power of "15 kWh" was requested at "18:00 to 18:30 on Thursday, September 12, 2013" and actually the consumed electrical power amount of "6 kWh" was suppressed, and the consumption suppression of the electrical power of "15 kWh" was requested at "18:00 to 18:30 on Thursday, September 19, 2013" and actually the consumed electrical power amount of "11 kWh" was suppressed, as the power consumption suppression history information associated with customer A.

Incidentally, when various energy amounts acquired from the capacitor 21, the heat accumulator 22, and the power generator 23 are calculated as suppressible power consumption amounts, the suppressible power consumption amount calculation unit 20 may acquire the various energy amounts that are acquired from the capacitor 21, the heat accumulator 22, and the power generator 23.

For example, when the capacitor 21 of customer A has accumulated the electrical power of 5 kWh, the suppressible power consumption amount calculation unit 20 acquires "5 kWh" as customer A's suppressible power consumption amount. Moreover, when the heat accumulator 22 of customer A has accumulated the heat of 4000 kJ, the suppressible power consumption amount calculation unit 20 acquires "4000 kJ" as the amount equivalent to customer A's suppressible power consumption amount. Furthermore, when the output of the power generator 23 of customer A is 2 kW, the suppressible power consumption amount calculation unit 20 acquires "2 kW" as the amount equivalent to customer A's suppressible power consumption amount.

Next, the suppressible power consumption amount calculation unit 20 calculates the suppressible power consumption amount of the customer acquired in step SP1 by using the supply-demand adjustment contract information acquired in step SP2 and the power consumption suppression history information acquired in step SP3, and any one or all of the various energy amounts acquired from the capacitor 21, the heat accumulator 22, and the power generator 23 (SP4).

There are methods for calculating the suppressible power consumption amount, including: a calculation method of using the accumulated electrical power amount, the accumulated heat amount, and the generated electrical power amount which are real-time information in order to prioritize certainty; a calculation method of using the supply-demand adjustment contract information 80 to calculate the consumed electrical power amount which can be suppressed to the maximum extent; and a method of calculating an expected value of the consumed electrical power amount based on past results by using the power consumption suppression history information 90.

As an example, the method of calculating the expected value of the consumed electrical power amount based on the past results by using the power consumption suppression history information 90 will be explained here in order to calculate the suppressible power consumption amount on "Thursday, September 26, 2013." Referring to the power consumption suppression history information 90, it is shown that consumed electrical power amounts which customer A actually suppressed in the past are "13 kWh," "6 kWh," and "11 kWh" in chronological order. Therefore, an expected value of the suppressible power consumption amount for the next time on "Thursday, September 26, 2013" based on these past results can be calculated as (13+6+11)/3=10 kWh.

When the calculation is performed by using the accumulated electrical power amount, the accumulated heat amount, and the generated electrical power amount which are the real-time information in order to prioritize certainty, a total value of the accumulated electrical power amount acquired from the capacitor 21, the accumulated heat amount (converted to a kWh basis) acquired from the heat accumulator 22, and the generated electrical power amount (converted to the kWh basis) acquired from the power generator 23 is used as the suppressible power consumption amount.

When the calculation is performed by using the supply-demand adjustment contract information 80 in order to calculate the consumed electrical power amount which can be suppressed to the maximum extent, a value obtained by converting the suppressible power consumption amount defined in the supply-demand adjustment contract information 80 into a delivery time basis of the electrical power product (on a 30-minute basis in this case) is used as the suppressible power consumption amount.

The suppressible power consumption amount calculation unit 20 determines whether the above-described processing has been repeated on all customers who are calculation targets of the suppressible power consumption amount (SP5).

If the suppressible power consumption amount calculation unit 20 obtains a negative result in this determination, it selects another customer and repeats the above-described processing; and if the suppressible power consumption amount calculation unit 20 obtains an affirmative result, it proceeds to step SP6.

The suppressible power consumption amount calculation unit 20 calculates a total amount of the suppressible power consumption amounts for the respective customers calculated in step SP4 (SP6).

For example, since customer A's suppressible power consumption amount is (13+6+11)/3=10 kWh as mentioned earlier and customer B's and customer C's suppressible power consumption amounts are (3+10+8)/3=7 kWh and (6+12+9)/3=9 kWh respectively, the suppressible power consumption amount calculation unit 20 calculates the total value as 10+7+9=26 kWh.

The suppressible power consumption amount calculation unit 20 records the suppressible power consumption amount of each customer and the total value of all the customers' suppressible power consumption amounts as the suppressible power consumption amount (Fig. 5) in the storage inside or outside the computer and terminates this suppressible power consumption amount calculation processing.

Incidentally, in this example, the suppressible power consumption amount is calculated by using all or all the supply-demand adjustment contract information 80, the power consumption suppression history information 90, the accumulated electrical power amount, the accumulated heat amount, and the generated electrical power amount of each customer; however, each region or all the customers may be set as the target instead of each customer and the suppressible power consumption amount may be calculated by using the supply-demand adjustment contract information, the power consumption suppression history information, the accumulated electrical power amount, the accumulated heat amount, the generated electrical power amount, and so on of each target.

### (5-2) Market Price Change Prediction Processing

Fig. 18 illustrates a processing sequence for market price change prediction processing. This market price change prediction processing is processing executed by the market price prediction unit 50 for calculating the market price change prediction information (Fig. 8) by referring to the market price information 100 (Fig. 6) and the external information 110 (Fig. 7). The processing will be explained by referring to the market price prediction unit 50 as a processing subject.

Known methods for calculating predicted values of changes of the market price are linear prediction methods (such as a regression model), nonlinear prediction methods (such as a neural network), or hybrid methods which are combinations of the linear prediction methods and the nonlinear prediction methods. A predicted value calculation method will be explained below In case of using the regression model which is one of the linear prediction methods.

The market price prediction unit 50 firstly selects an electrical power product which is a predicted value calculation target (SP11). Then, the market price prediction unit 50 refers to the market price information 100 and acquires the market price information associated with the electrical power product selected in step SP11 (SP12).

For example, if the electrical power product selected in step SP11 is "HH37" regarding which the electrical power is delivered at "18:00 to 18:30," the market price prediction unit 50 acquires information indicating "7.6 yen/kWh at 11:30, 7.7 yen/kWh at 12:00, 7.6 yen/kWh at 12:30, 7.7 yen/kWh at 13:00, and 7.9 yen/kWh at 13:30" as the market price information associated with the electrical power product HH37.

Next, the market price prediction unit 50 acquires the external information 110 (SP13). For example, the market price prediction unit 50 acquires, as the external information, history information indicating "23.5°C at 11:30, 20.1°C at 12:00, 21.3°C at 12:30, 21.9°C at 13:00, and 25.8°C at 13:30" and prediction information indicating "22.7°C at 14:00, 19.8°C at 14:30, 24.2°C at 15:00, 23.1°C at 15:30, and 22.8°C at 16:00."

Subsequently, the market price prediction unit 50 estimates parameters for a price prediction model by using the market price information acquired in step SP12 and the external information (the history information and the prediction information) acquired in step SP13 (SP14).

The parameters for the price prediction model are weight coefficients for the market price information and the external information (the history information and the prediction information) which explain a predicted value of the market price at one time point ahead. The predicted value of the market price at one time point later can be calculated by multiplying the market price information and the external information (the history information and the prediction information) by the respective weight coefficients and adding products of these multiplications. When the market prices at and before 13:30 are already known, the market price at one time point later means the market price at 14:00.

For example, a case where the market price of the electrical power product "HH37" at one time point later, regarding which the electrical power is delivered at "18:00 to 18:30," can be explained by using market prices at present time, one time point before, and two time points before, and the temperature at the present time according to the regression model will be examined. In this case, weight coefficients of the market prices at the present time, one time point before, and two time points before, and the temperature at the present time, that is, parameters for the price prediction model can be estimated by using, for example, the least-square method.

The market price information of the market price of the electrical power product "HH37" regarding which the electrical power is delivered at "18:00 to 18:30" is "7.6 yen/kWh at 11:30, 7.7 yen/kWh at 12:00, 7.6 yen/kWh at 12:30, 7.7 yen/kWh at 13:00, 7.9 yen/kWh at 13:30" and the history information is "23.5°C at 11:30, 20.1°C at 12:00, 21.3°C at 12:30, 21.9°C at 13:00, and 25.8°C at 13:30."

When the weight coefficients of the market prices at the present time, one time point before, and two time points before and the temperature at the present time are calculated by using the least-square method with respect to the above-mentioned information, the following calculation results can be obtained: the "weight coefficient of the market price at the present time is 0.4," the "weight coefficient of the market price at one time point before is 0.3," the "weight coefficient of the market price at two time points before is 0.1," and the "weight coefficient of the temperature at the present time is 0.1."

Next, the market price prediction unit 50 calculates the predicted value of the market price by using any one or all of the market price information acquired in step SP12 and the external information acquired in step SP13, and the parameters for the price prediction model as calculated in step SP14 (SP15).

For example, the market price prediction unit 50 calculates a predicted value of the market price of the electrical power product "HH37," regarding which the electrical power is delivered at "18:00 to 18:30," at one time point later, that is, the market price at 14:00 as 0.4x7.9+0.3x7.7+0.1 x7.6+0.1 x25.3=8.0 yen/kWh.

Incidentally, the predicted value of the market price at two time points later can be estimated by deeming the predicted value of the market price at one time point later as a true value and using it as an explanatory variable. The same applies to market prices at and after three time points later. The market price prediction unit 50 determines whether or not the above-described processing has been repeated on all the electrical power products which are targets of the predicted value calculation (SP16).

If the market price prediction unit 50 obtains a negative result in this determination, it selects another electrical power product and repeats the above-described processing; and if the market price prediction unit 50 obtains an affirmative result in this determination, it records a predicted value at several time points later for each electrical power product as the market price change prediction information (Fig. 8) in the storage inside or outside the computer and terminates this market price change prediction processing.

### (5-3) Position Amount Change Prediction Processing

Fig. 19 illustrates a processing sequence for position amount change prediction processing. This position amount change prediction processing is processing executed by the position amount prediction unit 60 for calculating the position amount change prediction information (Fig. 10) by referring to the position amount information 120 (Fig. 9) and the external information 110 (Fig. 7). The processing will be explained by referring to the position amount prediction unit 60 as a processing subject.

Known methods for calculating predicted values of changes of the position amount are linear prediction methods (such as a regression model), nonlinear prediction methods (such as a neural network), or hybrid methods which are combinations of the linear prediction methods and the nonlinear prediction methods. A predicted value calculation method will be explained below In case of using the regression model which is one of the linear prediction methods.

The position amount prediction unit 60 firstly selects an electrical power product which is a predicted value calculation target (SP21). Then, the position amount prediction unit 60 refers to the position amount information 120 and acquires the position amount information associated with the electrical power product selected in step SP21 (SP22).

For example, if the electrical power product selected in step SP21 is "HH37" regarding which the electrical power is delivered at "18:00 to 18:30," the position amount prediction unit 60 acquires information indicating "132 MWh at 11:30, 115 MWh at 12:00, 99 MWh at 12:30, 86 MWh at 13:00, and 74 MWh at 13:30" as the position amount information associated with the electrical power product HH37.

Next, the position amount prediction unit 60 acquires the external information 110 (SP23). For example, the position amount prediction unit 60 acquires, as the external information, history information indicating "23.5°C at 11:30, 20.1°C at 12:00, 21.3°C at 12:30, 21.9°C at 13:00, and 25.8°C at 13:30" and prediction information indicating "22.7°C at 14:00, 19.8°C at 14:30, 24.2°C at 15:00, 23.1°C at 15:30, and 22.8°C at 16:00."

Subsequently, the position amount prediction unit 60 estimates parameters for a position amount prediction model by using the position amount information acquired in step SP22 and the external information (the history information and the prediction information) acquired in step SP23 (SP24).

The parameters for the position amount prediction model are weight coefficients for the position amount information and the external information (the history information and the prediction information) which explain a predicted value of the position amount at one time point later. The predicted value of the position amount at one time point later can be calculated by multiplying the position amount information and the external information (the history information and the prediction information) by the respective weight coefficients and adding products of these multiplications.

For example, a case where the position amount of the electrical power product "HH37" at one time point later, regarding which the electrical power is delivered at "18:00 to 18:30," can be explained by using position amounts at present, one time point before, and two time points before according to the regression model will be examined. In this case, weight coefficients of the position amounts at the present time, one time point before, and two time points before, and the temperature at the present time, that is, parameters for the position amount prediction model can be estimated by using, for example, the least-square method.

The position amount information of the electrical power product "HH37" regarding which the electrical power is delivered at "18:00 to 18:30" is "132 MWh at 11:30, 115 MWh at 12:00, 99 MWh at 12:30, 86 MWh at 13:00, and 74 MWh at 13:30." When the weight coefficients of the position amounts at the present time, one time point before, and two time points before and the temperature at the present time are calculated by using the least-square method with respect to the above-mentioned information, the following calculation results can be obtained: the "weight coefficient of the position amount at the present time is 0.5," the "weight coefficient of the position amount at one time point before is 0.2," and the "weight coefficient of the position amount at two time points before is 0.1."

Next, the position amount prediction unit 60 calculates the predicted value of the position amount by using any one or all of the position amount information acquired in step SP22 and the external information acquired in step SP23, and the parameters for the position amount prediction model as calculated in step SP24 (SP25).

For example, the position amount prediction unit 60 calculates a predicted value of the position amount of the electrical power product "HH37," regarding which the electrical power is delivered at "18:00 to 18:30," at one time point later, that is, the position amount at 14:00 as 0.5×74+0.2x86+0.1×99=64 MWh.

Incidentally, the predicted value of the position amount at two time points later can be estimated by deeming the predicted value of the position amount at one time point later as a true value and using it as an explanatory variable. The same applies to position amounts at and after three time points later. The position amount prediction unit 60 determines whether or not the above-described processing has been repeated on all the electrical power products which are targets of the predicted value calculation (SP26).

If the position amount prediction unit 60 obtains a negative result in this determination, it selects another electrical power product and repeats the above-described processing; and if the position amount prediction unit 60 obtains an affirmative result in this determination, it records a predicted value at several time points later for each electrical power product as the position amount change prediction information (Fig. 8) in the storage inside or outside the computer and terminates this position amount change prediction processing.

### (5-4) Transaction Plan Planning Processing

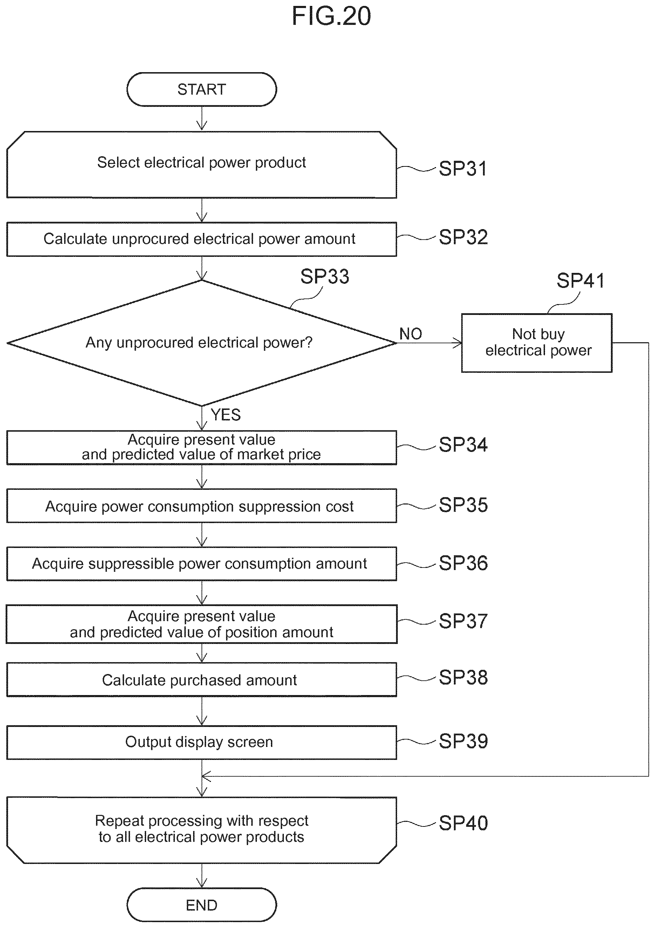

Fig. 20 illustrates a processing sequence for transaction plan planning processing. This transaction plan planning processing is processing executed by the transaction plan planning unit 70 for referring to the suppressible power consumption amount (Fig. 5), the market price information 100 (Fig. 6), the market price change prediction information (Fig. 8), the position amount change prediction information (Fig. 10), and the transaction plan planning rules (Fig. 11) and outputting the display screen (Fig. 16) to the output device 71. The processing will be explained by referring to the transaction plan planning unit 70 as a processing subject.

Incidentally, an explanation will be given on the basis of settings such that market prices at and before 13:30 are already known. In other words, a present value of the market price is the market price at 13:30.

The transaction plan planning unit 70 firstly selects an electrical power product which is a transaction plan planning target (SP31). Subsequently, the transaction plan planning unit 70 acquires an electrical power amount scheduled to be supplied to the customer and an electrical power amount procured from the electrical power transaction market and calculates an unprocured electrical power amount at the present time (SP32). Incidentally, the electrical power amount scheduled to be supplied to the customer is, for example, a predicted demand value calculated by an electrical power company.

For example, when the electrical power amount scheduled to be supplied to the customer at the time point of "18:00 to 18:30" is 230 MWh and the electrical power amount procured from the market at the present time is 170 MWh, the transaction plan planning unit 70 calculates the unprocured electrical power amount at the present time as 230-170=60 MWh.

Next, the transaction plan planning unit 70 determines whether any unprocured electrical power amount exists at present or not, on the basis of the unprocured electrical power amount calculated in step SP32 (SP33).

Since the case where the unprocured electrical power amount is calculated as 60 MWh in step SP32 is assumed here, the transaction plan planning unit 70 determines that "the unprocured electrical power amount exists." Incidentally, when the unprocured electrical power amount is 0 MWh, the transaction plan planning unit 70 determines that "no unprocured electrical power amount exists." In this case, the transaction plan planning unit 70 determines to "not buy" the electrical power from the electrical power transaction market at the present time (SP41) and terminates this transaction plan planning processing.

Subsequently, the transaction plan planning unit 70 acquires a present value of the market price associated with the electrical power product selected in step SP31 by referring to the market price information 100 and also acquires a predicted value of the market price associated with the electrical power product selected in step SP31 by referring to the market price change prediction information (Fig. 8) calculated by the market price prediction unit 50 (SP34).

For example, when the electrical power product selected in step SP31 is "HH37" regarding which the electrical power is delivered at "18:00 to 18:30," the transaction plan planning unit 70 acquires a present value of the market price "7.9 yen/kWh at 13:30" and predicted values of the market price "8.0 yen/kWh at 14:00, 7.8 yen/kWh at 14:30, 7.6 yen/kWh at 15:00, 7.3 yen/kWh at 15:30, and 7.1 yen/kWh at 16:00."

Next, the transaction plan planning unit 70 acquires power consumption suppression cost (SP35). For example, when the transaction plan planning unit 70 requests the customer to suppress the consumption of the electrical power at "18:00 to 18:30" and the power consumption suppression cost of 6.5 yen/kWh occurs, the transaction plan planning unit 70 acquires this power consumption suppression cost of 6.5 yen/kWh.

Then, the transaction plan planning unit 70 acquires the suppressible power consumption amount calculated by the suppressible power consumption amount calculation unit 20 (SP36). For example, when the suppressible power consumption amount for the time slot of "18:00 to 18:30" is 26 MWh, the transaction plan planning unit 70 acquires this suppressible power consumption amount.

Subsequently, the transaction plan planning unit 70 acquires a present value of the position amount associated with the electrical power product selected in step SP31 by referring to the position amount information 120 and acquires a predicted value of the position amount associated with the electrical power product similarly selected in step SP31 by referring to the position amount change prediction information (Fig. 10) calculated by the position amount prediction unit 60 (SP37).

For example, when the electrical power product selected in step SP31 is "HH37" regarding which the electrical power is delivered at "18:00 to 18:30," the transaction plan planning unit 70 acquires a present value of the position amount "74 MWh at 13:30" and predicted values of the position amount "64 MWh at 14:00, 56 MWh at14:30, 48 MWh at 15:00, 42 MWh at 15:30, and 36 MWh at 16:00."

Next, the transaction plan planning unit 70 refers to the transaction plan planning rules (Fig. 11) and calculates the amount of the electrical power to be purchased from the electrical power transaction market (SP38).

An explanation will be given here concerning a case where the transaction plan planning unit 70 refers to the transaction plan planning rules and calculates the purchased amount at each time point in examples of Fig. 13 to Fig. 15. Incidentally, it is assumed that the market price is always lower than the power consumption suppression cost.

Firstly, the purchased amount at the limit transaction time (when the suppressible power consumption amount calculation unit does not exist) in the example of Fig. 13 will be explained. The target price is lower than the present value at the limit transaction time (when the suppressible power consumption amount calculation unit does not exist). Accordingly, the transaction plan planning unit 70 determines that the rule specifying that "reduction of market price is expected" is "○." Moreover, the transaction plan planning unit 70 determines that the rule specifying "lower than power consumption suppression cost upon reduction of the market price" is "○." Furthermore, since the position amount is larger than the position amount threshold value (when the suppressible power consumption amount calculation unit exists), the transaction plan planning unit 70 determines that the rule specifying "insufficient position amount upon reduction of the market price" is "x."

As a result, the transaction plan planning unit 70 obtains the determination result of a combination of "○," "○," and "x." Referring to the transaction plan planning rules, the determination result of this combination of "○," "○," and "x" matches the determination result defined on the second row from the top and its purchased amount is defined as "Not buy the electrical power." Therefore, the transaction plan planning unit 70 calculates the purchased amount at the limit transaction time (when the suppressible power consumption amount calculation unit does not exist) as "0." Afterwards, the purchased amount will similarly become 0 whenever calculated at any time point before the limit transaction time (when the suppressible power consumption amount calculation unit exists).

Next, the purchased mount at the limit transaction time (when the suppressible power consumption amount calculation unit exists) will be explained. The target price is still lower than the present value at the limit transaction time (when the suppressible power consumption amount calculation unit exists). Accordingly, the transaction plan planning unit 70 determines that the rule specifying "reduction of market price is expected" is "○." Moreover, the transaction plan planning unit 70 determines that the rule specifying "lower than power consumption suppression cost upon reduction of the market price" is "○." Furthermore, since the position amount is identical to the position amount threshold value (when the suppressible power consumption amount calculation unit exists), the transaction plan planning unit 70 determines that the rule specifying "insufficient position amount upon reduction of the market price" is "○."

As a result, the transaction plan planning unit 70 obtains the determination result of a combination of "○," "○," and "○." Referring to the transaction plan planning rules, the determination result of this combination of "○," "○," and "○" matches the determination result defined on the first row from the top and the purchased amount is defined as "leave the suppressible power consumption amount." Therefore, the transaction plan planning unit 70 calculates 34 MWh, which is obtained by subtracting 26 MWh indicated as the suppressible power consumption amount (Fig. 5) from the unprocured electrical power amount of 60 MWh, as the purchased amount at the limit transaction time (when the suppressible power consumption amount calculation unit exists). Afterwards, the unprocured electrical power amount will become 26 MWh by subtracting 34 MWh from 60 MWh; and the purchased amount will become 0 by subtracting the suppressible power consumption amount of 26 MWh from the unprocured electrical power amount of 26 MWh whenever calculated at any time point before the time when the market price reaches the target price.

Next, the purchased amount at a point in time when the market price reaches the target price will be explained. At the point in time when the market price reaches the target price, the target price becomes identical to the present value. Therefore, the transaction plan planning unit 70 determines that the rule specifying that "reduction of market price is expected" is "x." Moreover, the transaction plan planning unit 70 determines that the rule specifying "lower than power consumption suppression cost upon reduction of the market price" is "○." Furthermore, since the position amount is smaller than the position amount threshold value (when the suppressible power consumption amount calculation unit exists), the transaction plan planning unit 70 determines that the rule specifying "insufficient position amount upon reduction of the market price" is "○."

As a result, the transaction plan planning unit 70 obtains the determination result of a combination of "x," "○," and "○." Referring to the transaction plan planning rules, the determination result of this combination of "x," "○," and "○" matches the determination result defined on the fifth row from the top and the purchased amount is defined as "buy the entire amount." Therefore, the transaction plan planning unit 70 calculates the unprocured electrical power amount of 26 MWh as the purchased amount to be purchased from the electrical power transaction market. If the position amount is less than 26 MWh, the entire position amount will be purchased. For example, if the position amount is "22 MWh," the purchased amount will be calculated as 22 MWh. Regarding the remaining unprocured electrical power amount of 4 MWh, the power consumption suppression cost will be paid to the customer.

Next, the purchased amount at any time point before the limit transaction time in an example of Fig. 14 will be explained. At any time point before the limit transaction time, the predicted value of the market price predicted by the market price prediction unit 50 becomes lower than the present value of the market price. Therefore, the transaction plan planning unit 70 determines that the rule specifying "reduction of market price is expected" is "○." Moreover, the transaction plan planning unit 70 determines that the rule specifying "lower than power consumption suppression cost upon reduction of the market price" is "○." Furthermore, since the position amount is larger than the position amount threshold value, the transaction plan planning unit 70 determines that the rule specifying "insufficient position amount upon reduction of the market price" is "x."

As a result, the transaction plan planning unit 70 obtains the determination result of a combination of "○," "○," and "x." Referring to the transaction plan planning rules, the determination result of this combination of "○," "○," and "x" matches the determination result defined on the second row from the top and the purchased amount is defined as "Not buy the electrical power." Therefore, the transaction plan planning unit 70 calculates the purchased amount at this time point as "0."

Next, the purchased amount at the limit transaction time will be explained. At the limit transaction time, the predicted value of the market price predicted by the market price prediction unit 50 becomes lower than the present value of the market price. Therefore, the transaction plan planning unit 70 determines that the rule specifying "reduction of market price is expected" is "○." Moreover, the transaction plan planning unit 70 determines that the rule specifying "lower than power consumption suppression cost upon reduction of the market price" is "○." Furthermore, since the position amount is identical to the position amount threshold value, the transaction plan planning unit 70 determines that the rule specifying "insufficient position amount upon reduction of the market price" is "○."

As a result, the transaction plan planning unit 70 obtains the determination result of a combination of "○," "○," and "○." Referring to the transaction plan planning rules, the determination result of this combination of "○," "○," and "○" matches the determination result defined on the first row from the top and the purchased amount is defined as "leave the suppressible power consumption amount." Therefore, the transaction plan planning unit 70 calculates 34 MWh, which is obtained by subtracting 26 MWh indicated as the suppressible power consumption amount (Fig. 5) from the unprocured electrical power amount of 60 MWh, as the purchased amount. Afterwards, the unprocured electrical power amount will become 26 MWh obtained by subtracting 34 MWh from 60 MWh; and the purchased amount will be 0 by subtracting the suppressible power consumption amount of 26 MWh from the unprocured electrical power amount of 26 MWh whenever calculated at any time point until the market price reaches the lowest price.

Next, the purchased amount at a point in time when the market price reaches the lowest price will be explained. At the point in time when the market price reaches the lowest price, the predicted value becomes identical to the present value. Therefore, the transaction plan planning unit 70 determines that the rule specifying that "reduction of market price is expected" is "x." Moreover, the transaction plan planning unit 70 determines that the rule specifying "lower than power consumption suppression cost upon reduction of the market price" is "○." Furthermore, since the position amount is smaller than the position amount threshold value, the transaction plan planning unit 70 determines that the rule specifying "insufficient position amount upon reduction of the market price" is "○."

As a result, the transaction plan planning unit 70 obtains the determination result of a combination of "x," "○," and "○." Referring to the transaction plan planning rules, the determination result of this combination of "x," "○," and "○" matches the determination result defined on the fifth row from the top and the purchased amount is defined as "buy the entire amount." Therefore, the transaction plan planning unit 70 calculates the unprocured electrical power amount of 26 MWh as the purchased amount. If the position amount is less than 26 MWh, the entire position amount will be purchased. For example, if the position amount is "19 MWh," the purchased amount will be calculated as 19 MWh. Regarding the remaining unprocured electrical power amount of 7 MWh, the power consumption suppression cost will be paid to the customer.

Next, the purchased amount at any time point before the limit transaction time in an example of Fig. 15 will be explained. At any time point before the limit transaction time, the predicted value of the market price predicted by the market price prediction unit 50 becomes lower than the present value of the market price. Therefore, the transaction plan planning unit 70 determines that the rule specifying "reduction of market price is expected" is "○." Moreover, the transaction plan planning unit 70 determines that the rule specifying "lower than power consumption suppression cost upon reduction of the market price" is "○." Furthermore, the predicted value of the position amount predicted by the position amount prediction unit 60 continues to be larger than the position amount threshold value for long while reduction of the market price is predicted. Therefore, the transaction plan planning unit 70 determines that the rule specifying "insufficient position amount upon reduction of the market price" is "x."

As a result, the transaction plan planning unit 70 obtains the determination result of a combination of "○," "○," and "x." Referring to the transaction plan planning rules, the determination result of this combination of "○," "○," and "x" matches the determination result on the second row from the top and the purchased amount is defined as "Not buy the electrical power." Therefore, the transaction plan planning unit 70 calculates the purchased amount at this time point as "0."

Next, an explanation will be given concerning the purchased amount at lowest value price time 1 that is before the limit transaction time and when the market price hits a record of the lowest price. At the lowest value price time 1, the predicted value of the market price predicted by the market price prediction unit 50 may become lower than the present value of the market price, so that the transaction plan planning unit 70 determines that the rule specifying "reduction of market price is expected" is "○." Moreover, the transaction plan planning unit 70 determines that the rule specifying "lower than power consumption suppression cost upon reduction of the market price" is "○." Furthermore, the market price is predicted to become lower than the present price after the limit transaction time; and at that point in time, the position amount is predicted to become smaller than the position amount threshold value. Therefore, the transaction plan planning unit 70 determines that the rule specifying "insufficient position amount upon reduction of the market price" is "○."

As a result, the transaction plan planning unit 70 obtains the determination result of a combination of "○," "○," and "○." Referring to the transaction plan planning rules, the determination result of this combination of "○," "○," and "○" matches the determination result on the first row from the top and the purchased amount is defined as "leave the suppressible power consumption amount." Therefore, the transaction plan planning unit 70 calculates 34 MWh, which is obtained by subtracting 26 MWh indicated as the suppressible power consumption amount (Fig. 5) from the unprocured electrical power amount of 60 MWh, as the purchased amount. Afterwards, the unprocured electrical power amount will become 26 MWh obtained by subtracting 34 MWh from 60 MWh; and the purchased amount will be 0 by subtracting the suppressible power consumption amount of 26 MWh from the unprocured electrical power amount of 26 MWh whenever calculated at any time point until the market price reaches the lowest price.

Next, an explanation will be given concerning the purchased amount at lowest value price time 2 that is after the limit transaction time and when the market price hits a record of the lowest price. At the lowest value price time 2, the market price is predicted to increase thereafter, so that the transaction plan planning unit 70 determines the rule specifying that "reduction of market price is expected" is "x." Moreover, the transaction plan planning unit 70 determines that the rule specifying "lower than power consumption suppression cost upon reduction of the market price" is "○." Furthermore, since the position amount is predicted to be smaller than the position amount threshold value, the transaction plan planning unit 70 determines that the rule specifying "insufficient position amount upon reduction of the market price" is "○."

As a result, the transaction plan planning unit 70 obtains the determination result of a combination of "x," "○," and "○." Referring to the transaction plan planning rules, the determination result of this combination of "x," "○," and "○" matches the determination result on the fifth row from the top and the purchased amount is defined as "buy the entire amount." Therefore, the transaction plan planning unit 70 calculates the unprocured electrical power amount of 26 MWh as the purchased amount. If the position amount is less than 26 MWh, the entire position amount will be purchased. For example, if the position amount is "19 MWh," the purchased amount will be calculated as 19 MWh. Regarding the remaining unprocured electrical power amount of 7 MWh, the power consumption suppression cost will be paid to the customer.

Referring back to Fig. 20, the transaction plan planning unit 70 outputs the purchased amount calculated in step SP38 to the display screen (Fig. 16) on the output device 71 (SP40).

The transaction plan planning unit 70 repeats the above-described processing on all the electrical power products (SP40) and then terminates this transaction plan planning processing.

### (6) Advantageous Effects of This Embodiment

The power transaction plan planning support system 10 according to this embodiment described above is designed to: have the suppressible power consumption amount calculation unit 20 calculate the suppressible power consumption amount; have the market price prediction unit 50 calculate the predicted value of the market price; have the position amount prediction unit 60 calculate the predicted value of the position amount; and calculate the purchased amount at the present time on the basis of these calculated suppressible power consumption amount, predicted value of the market price, and predicted value of the position amount, and the predefined transaction plan planning rules. Consequently, earnings from the electrical power transaction can be maximized by reducing the risk of buying the electrical power at a high price from the electrical power transaction market along with changes in the market price and the position amount and reducing the risk of becoming no longer capable of buying the electrical power from the electrical power transaction market due to a shortage of the position amount.

### REFERENCE SIGNS LIST

- 10: power transaction plan planning support system
- 20: suppressible power consumption amount calculation unit
- 30: market information acquisition unit
- 40: external information acquisition unit
- 50: market price prediction unit
- 60: position amount prediction unit
- 70: transaction plan planning unit
- 80: supply-demand adjustment contract information
- 90: power consumption suppression history information
- 100: market price information
- 110: external information
- 120: position amount information

## Claims

1. A power transaction plan planning support system for planning an electrical power transaction plan, comprising:
a suppressible power consumption amount calculation unit which calculates a suppressible power consumption amount;
a market information acquisition unit which acquires a market price and a position amount;
a transaction plan planning rule which defines a position amount threshold value which serves as a criterion to determine whether the position amount is insufficient or not, as a determination condition to determine whether to buy electrical power from an electrical power transaction market or not; and
a transaction plan planning unit which reduces the position amount threshold value by the suppressible power consumption amount and calculates an amount of the electrical power to be purchased from the electrical power transaction market on the basis of the reduced position amount threshold value, the market price, and the transaction plan planning rule.

2. The electrical power transaction plan planning system according to claim 1,
wherein when the transaction plan planning unit extends limit transaction time by reducing the position amount threshold value by the suppressible power consumption amount and the market price becomes equal to or lower than a predetermined target price before the extended limit transaction time, the transaction plan planning unit determines to buy the electrical power from the electrical power transaction market at a point in time when the market price becomes equal to or lower than a predetermined target price.

3. The power transaction plan planning support system according to claim 1, further comprising a market price prediction unit which predicts future changes of the market price,
wherein the transaction plan planning unit calculates the amount of the electrical power to be purchased from the electrical power transaction market on the basis of the reduced position amount threshold value, the market price, the transaction plan planning rule, and the prediction by the market price prediction unit.

4. The power transaction plan planning support system according to claim 3,
wherein when the transaction plan planning unit extends limit transaction time by reducing the position amount threshold value by the suppressible power consumption amount and the market price is predicted to become a lowest price at or after the extended limit transaction time, the transaction plan planning unit determines to buy the electrical power from the electrical power transaction market at a point in time when the market price is predicted to become the lowest price.

5. The power transaction plan planning support system according to claim 3, further comprising a position amount prediction unit which predicts future changes of the position amount,
wherein the transaction plan planning unit calculates the amount of the electrical power to be purchased from the electrical power transaction market on the basis of the reduced position amount threshold value, the market price, the transaction plan planning rule, the prediction by the market price prediction unit, and the prediction by the position amount prediction unit.

6. The power transaction plan planning support system according to claim 5,
wherein when the transaction plan planning unit extends limit transaction time by reducing the position amount threshold value by the suppressible power consumption amount and the market price is predicted to become a lowest price at or after the extended limit transaction time and the position amount at a point in time when the market price is predicted to become the lowest price is equal to or lower than the position amount threshold value, the transaction plan planning unit determines to buy the electrical power from the electrical power transaction market at the point in time when the market price is predicted to become the lowest price before the extended limit transaction time.

7. The power transaction plan planning system according to claim 1, further comprising an output device for displaying the suppressible power consumption amount, the market price, the position amount, and the purchased amount on a display screen.

8. A power transaction plan planning support method for planning an electrical power transaction plan, comprising:
a first step executed by a suppressible power consumption amount calculation unit calculating a suppressible power consumption amount;
a second step executed by a market information acquisition unit acquiring a market price and a position amount; and
a third step executed by a transaction plan planning unit reducing a predetermined position amount threshold value by the suppressible power consumption amount and calculating an amount of electrical power to be purchased from an electrical power transaction market on the basis of the reduced position amount threshold value, the market price, and a transaction plan planning rule which defines the position amount threshold value as a determination condition to determine whether to buy the electrical power from the electrical power transaction market or not.

9. The electrical power transaction plan planning method according to claim 8,
wherein in the third step, when the transaction plan planning unit extends limit transaction time by reducing the position amount threshold value by the suppressible power consumption amount and the market price becomes equal to or lower than a predetermined target price before the extended limit transaction time, the transaction plan planning unit determines to buy the electrical power from the electrical power transaction market at a point in time when the market price becomes equal to or lower than a predetermined target price.

10. The power transaction plan planning support method according to claim 8, further comprising a fourth step executed by a market price prediction unit predicting future changes of the market price,
wherein in the third step, the transaction plan planning unit calculates the amount of the electrical power to be purchased from the electrical power transaction market on the basis of the reduced position amount threshold value, the market price, the transaction plan planning rule, and the prediction by the market price prediction unit.

11. The power transaction plan planning support method according to claim 10, wherein in the third step, when the transaction plan planning unit extends limit transaction time by reducing the position amount threshold value by the suppressible power consumption amount and the market price is predicted to become a lowest price at or after the extended limit transaction time, the transaction plan planning unit determines to buy the electrical power from the electrical power transaction market at a point in time when the market price is predicted to become the lowest price.

12. The power transaction plan planning support method according to claim 10, further comprising a fifth step executed by a position amount prediction unit predicting future changes of the position amount,
wherein in the third step, the transaction plan planning unit calculates the amount of the electrical power to be purchased from the electrical power transaction market on the basis of the reduced position amount threshold value, the market price, the transaction plan planning rule, the prediction by the market price prediction unit, and the prediction by the position amount prediction unit.

13. The power transaction plan planning support method according to claim 12,
wherein in the third step, when the transaction plan planning unit extends limit transaction time by reducing the position amount threshold value by the suppressible power consumption amount and the market price is predicted to become a lowest price at or after the extended limit transaction time and the position amount at a point in time when the market price becomes the lowest price is equal to or lower than the position amount threshold value, the transaction plan planning unit determines to buy the electrical power from the electrical power transaction market at the point in time when the market price is predicted to become the lowest price before the extended limit transaction time.

14. The power transaction plan planning method according to claim 8, further comprising a sixth step executed by an output device displaying the suppressible power consumption amount, the market price, the position amount, and the purchased amount on a display screen.
